# EUROPEAN PATENT SPECIFICATION

(11) **EP 4 191 218 B1**
(45) Date of publication and mention of the grant of the patent: **18.02.2026**
(21) Application number: 21954240.4
(22) Date of filing: 19.08.2021
(51) Int. Cl.: G01L 9/00, G01P 15/08, G01P 15/12

(54) **SENSOR APPARATUS AND METHOD OF FABRICATING SENSOR APPARATUS**
SENSORVORRICHTUNG UND VERFAHREN ZUR HERSTELLUNG DER SENSORVORRICHTUNG
DISPOSITIF CAPTEUR ET PROCÉDÉ DE PRODUCTION DE DISPOSITIF CAPTEUR

(43) Date of publication of application: 07.06.2023
(73) Proprietor: Fuji Electric Co., Ltd., Kawasaki-shi, Kanagawa 210-9530 (JP)
(72) Inventor: MATSUSHITA, Koji, Kawasaki-shi, Kanagawa 210-9530 (JP)
(74) Representative: MERH-IP Matias Erny Reichl Hoffmann Patentanwälte PartG mbB
(86) International application number: PCT/JP2021/030475
(87) International publication number: WO 2023/021672

(56) References cited:
- WO-A1-2018/235415
- JP-A- 2013 030 759
- JP-A- 2015 031 513
- JP-A- H10 227 709
- US-A- 4 996 627
- US-A- 5 446 616
- US-A1- 2020 064 214

## Description

### BACKGROUND

### 1. TECHNICAL FIELD

The present invention relates to a sensor apparatus and a method of fabricating the sensor apparatus.

### 2. RELATED ART

Patent document 1 describes that "a fluctuation of a vacuum pressure atmosphere in a physical quantity sensor is suppressed" (abstract). Patent document 2 describes that "with a simple procedure, anodic bonding is achieved while locking between a movable electrode and a fixed electrode is suppressed" (abstract). Patent document 3 relates to a physical quantity sensor configured to detect a physical quantity. Patent document 4 discloses a sensing electrode on a glass layer of an anodically-bonded capacitate sensor. Further examples of sensors are discloses in Patent documents 5 to 7. Patent document 8 discloses a device for packaging e.g. an electronic circuit, comprising a semiconductor substrate bonded to a glass substrate generating a sealed cavity in which sensing components are placed.

### List of cited references

### Patent documents

Patent document 1: Japanese Patent Application Publication No. JP 2014-173961
Patent document 2: Japanese Patent Application Publication No. JP 2010-171203
Patent document 3: US Patent Application Publication No. US 2020/064214 A1
Patent document 4: US Patent Application Publication No. US 5,446,616 A
Patent document 5: Japanese Patent Application Publication No. JP 2015-031513
Patent document 6: US Patent Application Publication No. US 4,996,627
Patent document 7: Japanese Patent Application Publication No. JP H10 227709
Patent document 8: Japanese Patent Application Publication No. JP 2013-030759 A.

### Technical problem

Preferably, a sensor can be easily and also reliably sealed in a sensor apparatus. General disclosure

According to a first aspect of the present invention, there is provided a sensor apparatus according to claim 1.

The semiconductor substrate may have, in the second bonding portion, an oxide layer of oxygen and a semiconductor contained in the semiconductor substrate.

In the top view, a through hole is provided to the glass substrate in a position overlapped with the pad portion. The glass substrate has a metal film provided to a side wall of the through hole. The pad portion is formed of a metal. The metal film is in contact with the pad portion.

The metal film may include an extension portion provided to extend from the side wall of the through hole to a lower surface of the glass substrate that is a lower surface in contact with the sealed space. The extension portion may be in contact with the pad portion.

The pad portion may be surrounded by the metal film in the top view.

The extension portion may include a metal film outer circumferential portion in contact with the sealed space. A lower surface of the metal film outer circumferential portion may be arranged below an upper surface of the pad portion.

The metal film may be surrounded by the pad portion in the top view.

The pad portion may include a pad outer circumferential portion in contact with the sealed space. An upper surface of the pad outer circumferential portion may be arranged above a lower surface of the extension portion.

A sum of a thickness of the pad portion and a thickness of the extension portion may be greater than a height of the sealed space in the position overlapped with the pad portion in the top view.

The sum of the thickness of the pad portion and the thickness of the extension portion may be 1.1 times or more and 1.3 times or less as large as the height of the sealed space in the position overlapped with the pad portion in the top view.

A distance from an inner side surface of the glass substrate to the pad portion in an in-plane direction of the semiconductor substrate may be greater than the height of the sealed space.

The distance from the inner side surface of the glass substrate to the pad portion in the in-plane direction of the semiconductor substrate may be 20 times or more and 200 times or less as large as the height of the sealed space.

The distance from the inner side surface of the glass substrate to the pad portion may increase from an upper end towards a lower end in the inner side surface of the glass substrate in the in-plane direction of the semiconductor substrate.

The through hole includes a first section in which a width of the through hole may decrease from an upper end of the through hole towards a bottom, and a second section in which the width of the through hole decreases from a lower end of the through hole towards a top. A width of the first section at the upper end of the through hole may be greater than a width of the second section at the lower end of the through hole.

The first section may be tapered in a manner that the width of the through hole widens from the bottom towards the top. The second section may be tapered in a manner that the width of the through hole widens from the top towards the bottom.

The pad portion may be circular in the top view.

A surrounding of the pad portion may be arcuate in the top view.

A shape of the surrounding of the pad portion may include arcs of different circles with a plurality of radii of curvature.

The radius of curvature may be 0.1 times or more and 1.0 time or less as large as a diameter of the pad portion in the top view.

In the top view, the first bonding portion may be arranged between a plurality of pad portions.

In the top view, the second bonding portion may be arranged between a plurality of pad portions.

According to a second aspect of the present invention, there is provided a method of fabricating a sensor apparatus according to claim 12.

A through hole is provided to the glass substrate in the top view. The glass substrate has a metal film provided to a side wall of the through hole. The pad portion is formed of a metal. The bonding is sealing the physical quantity sensor and the pad portion by performing anodic bonding between the first bonding portion and the second bonding portion, and is also sealing the through hole by the pad portion.

The method of fabricating the sensor apparatus may include forming a through hole before the bonding. The forming a through hole may have forming a first section and forming a second section. The forming a first section may be blasting an upper surface of the glass substrate. The forming a second section may be blasting a lower surface of the glass substrate.

Before the bonding, one end closer to the physical quantity sensor in a lower surface of the first bonding portion and an other end arranged to be further spaced away from the physical quantity sensor than the one end may be arranged to be spaced away from an upper surface of the semiconductor substrate, and the one end and the other end may be arranged in a manner that a distance between the upper surface of the semiconductor substrate and the one end in a direction intersecting with the upper surface of the semiconductor substrate becomes greater than a distance between the upper surface of the semiconductor substrate and the other end. In the bonding, after the lower surface of the first bonding portion rotates about the other end in a direction to the semiconductor substrate, the first bonding portion and the second bonding portion may be subjected to anodic bonding.

The method of fabricating the sensor apparatus may further include etching for forming a concave portion to at least the semiconductor substrate and the glass substrate by wet etching before the bonding.

The summary clause does not necessarily describe all necessary features of the embodiments of the present invention. The present invention may also be a subcombination of the features described above.

### BRIEF DESCRIPTION OF THE DRAWINGS

Fig. 1 illustrates an example of a sensor apparatus 100 according to an embodiment of the present invention.
Fig. 2 illustrates an example of a top view of a semiconductor substrate 10 in the sensor apparatus 100 of Fig. 1.
Fig. 3 illustrates an example of the top view of the semiconductor substrate 10 in the sensor apparatus 100 of Fig. 1.
Fig. 4 illustrates an example of the top view of a glass substrate 20 in the sensor apparatus 100 of Fig. 1.
Fig. 5 is an enlarged view of a first bonding portion 22 of the glass substrate 20 and a second bonding portion 16 of the semiconductor substrate 10 in Fig. 1.
Fig. 6 is an enlarged view in the vicinity of a through hole 50-2 and a pad portion 30-2 in Fig. 1.
Fig. 7 is a diagram of the through hole 50-2 and pad portion 30-2 in Fig. 6 in the top view.
Fig. 8 is another enlarged view in the vicinity of the through hole 50-2 and the pad portion 30-2 in Fig. 1.
Fig. 9 is a diagram of the through hole 50-2 and the pad portion 30-2 in Fig. 8 in the top view.
Fig. 10 is an enlarged view in the vicinity of the through hole 50-2, the pad portion 30-2, the first bonding portion 22, and the second bonding portion 16 in Fig. 1.
Fig. 11 is another enlarged view in the vicinity of the through hole 50-2, the pad portion 30-2, the first bonding portion 22, and the second bonding portion 16 in Fig. 1.
Fig. 12 is another enlarged view in the vicinity of the through hole 50-2, the pad portion 30-2, the first bonding portion 22, and the second bonding portion 16 in Fig. 1.
Fig. 13 is another enlarged view in the vicinity of the through hole 50-2 in the glass substrate 20.
Fig. 14 illustrates another example of the top view of the semiconductor substrate 10 in the sensor apparatus 100 of Fig. 1.
Fig. 15 is an enlarged view of the single pad portion 30 in the sensor apparatus 100 of Fig. 1 in the top view.
Fig. 16 illustrates an example of a method of fabricating the sensor apparatus 100 according to an embodiment of the present invention.
Fig. 17 illustrates another example of the method of fabricating the sensor apparatus 100 according to an embodiment of the present invention.
Fig. 18 illustrates another example of the method of fabricating the sensor apparatus 100 according to an embodiment of the present invention.

### DESCRIPTION OF EXEMPLARY EMBODIMENTS

Hereinafter, the present invention will be described through embodiments of the invention, but the following embodiments do not limit the claimed invention. In addition, not all of the combinations of features described in the embodiments are essential to solving means of the invention.

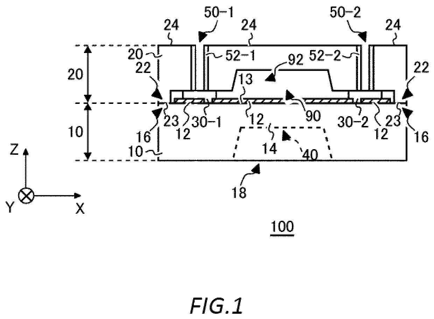

Fig. 1 illustrates an example of a sensor apparatus 100 according to an embodiment of the present invention. A sensor apparatus 100 includes a semiconductor substrate 10, a glass substrate 20, a physical quantity sensor 40, and a pad portion 30. The pad portion 30 is electrically connected to the physical quantity sensor 40. An oxide film 12 may be provided to at least a part of an upper surface 13 of the semiconductor substrate 10. In Fig. 1, the oxide film 12 is indicated by hatching.

In the present specification, a technical matter may be described by using orthogonal coordinate axes of an X axis, a Y axis, and a Z axis. In the present specification, a plane parallel to the upper surface 13 of the semiconductor substrate 10 is set as an XY plane, and a direction that is a direction perpendicular to the upper surface 13 and also a direction from the semiconductor substrate 10 towards the glass substrate 20 is set as a Z axis direction. In the present specification, a predetermined direction in the XY plane is set as an X axis direction, and a direction orthogonal to the X axis in the XY plane is set as a Y axis direction. The Z axis may be parallel to a vertical direction, and the XY plane may be a horizontal plane. Fig. 1 is a diagram of the sensor apparatus 100 when viewed in the Y axis direction.

In the present specification, a glass substrate 20 side in the sensor apparatus 100 will be referred to as "up" and a semiconductor substrate 10 side will be referred to as "down". In the present specification, a case where the sensor apparatus 100 is viewed in a direction from the glass substrate 20 towards the semiconductor substrate 10 parallel to the Z axis will be referred to as a top view. A direction of "up" and "down" is not limited to the vertical direction. In the present specification, a case where the sensor apparatus 100 is viewed in an XY in-plane direction will be referred to as a side view.

The semiconductor substrate 10 is, for example, a silicon (Si) substrate. The glass substrate 20 contains a cation. The glass substrate 20 is, for example, a silicate glass substrate.

A concave portion 90 is provided to the glass substrate 20. In the present example, the concave portion 90 is provided to the glass substrate 20. In the present example, the concave portion 90 is provided in a direction from a lower surface 23 of the glass substrate 20 to an upper surface 24.

The glass substrate 20 has a first bonding portion 22. The semiconductor substrate 10 has a second bonding portion 16. The concave portion 90 is sealed by bonding the first bonding portion 22 to the second bonding portion 16. A space sealed by the semiconductor substrate 10 and the glass substrate 20 will be set as a sealed space 92. The sealed space 92 is the concave portion 90 which is sealed by bonding the first bonding portion 22 to the second bonding portion 16.

The physical quantity sensor 40 is a sensor configured to sense a physical quantity of a target object. The physical quantity sensor 40 may be a pressure sensor, or may be an acceleration sensor. The physical quantity sensor 40 may be provided to the semiconductor substrate 10. The physical quantity sensor 40 may be a part of the semiconductor substrate 10. The physical quantity sensor 40 may be a micro electro mechanical systems (MEMS) sensor.

The physical quantity sensor 40 may have a diaphragm 14. The diaphragm 14 may be a part of the semiconductor substrate 10. When the diaphragm 14 is a part of the semiconductor substrate 10, a concave portion 18 may be provided below the diaphragm 14 in the semiconductor substrate 10. In Fig. 1, a position of the concave portion 18 in the side view is indicated by a broken line.

The sensor apparatus 100 may include a plurality of pad portions 30. In Fig. 1, two pad portions 30 (a pad portion 30-1 and a pad portion 30-2) are illustrated. The pad portion 30 may be provided in contact with the upper surface 13, or may be provided in contact with the oxide film 12.

The physical quantity sensor 40 and the pad portion 30 are arranged in the sealed space 92. The sealed space 92 may be a vacuum. The vacuum may refer to an atmospheric pressure of 100 kPa or less.

A through hole 50 is provided to the glass substrate 20. A plurality of through holes 50 may be provided to the glass substrate 20. In Fig. 1, two through holes 50 (a through hole 50-1 and a through hole 50-2) are illustrated. The through hole 50 penetrates through the glass substrate 20 from the upper surface 24 to a lower surface 27 (described below). The through hole 50 is in communication with the concave portion 90. The through hole 50 is provided at a position overlapped with the pad portion 30 in the top view. In the top view, an area of the through hole 50 may be less than an area of the pad portion 30.

The glass substrate 20 has a metal film 52 provided to a side wall of the through hole 50. When the plurality of through holes 50 are provided to the glass substrate 20, the glass substrate 20 may have a plurality of metal films 52 respectively corresponding to the plurality of through holes 50. In Fig. 1, two metal films 52 (a metal film 52-1 and a metal film 52-2) are illustrated.

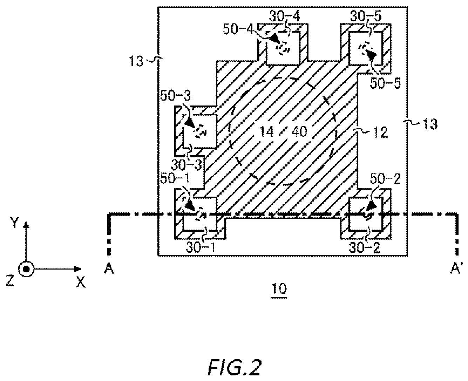

Fig. 2 illustrates an example of the top view of the semiconductor substrate 10 in the sensor apparatus 100 of Fig. 1. In Fig. 2, a position of the oxide film 12 in the top view is indicated by hatching. The oxide film 12 may be arranged in contact with the upper surface 13. In Fig. 2, positions of the diaphragm 14 and the physical quantity sensor 40 in the top view are indicated by rough broken lines.

In the present example, the sensor apparatus 100 includes five pad portions 30 (a pad portion 30-1 to a pad portion 30-5). The five pad portions 30 may be arranged in a surrounding of the diaphragm 14. As will be described below, in the present example, five through holes 50 (a through hole 50-1 to a through hole 50-5) are provided to the glass substrate 20. In Fig. 2, positions of the through hole 50-1 to the through hole 50-5 in the top view are indicated by broken lines.

Note that Fig. 1 is a cross-sectional view along an A-A' line illustrated in Fig. 2. An A-A' cross section is an XZ cross section through the semiconductor substrate 10, the oxide film 12, the pad portion 30-1, and the pad portion 30-2.

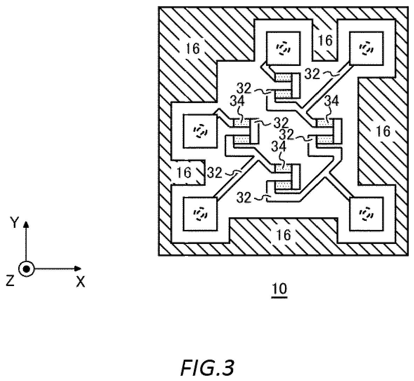

Fig. 3 illustrates an example of the top view of the semiconductor substrate 10 in the sensor apparatus 100 of Fig. 1. Fig. 3 is a diagram of the semiconductor substrate 10 in the top view which is similar to Fig. 2, but indications of the oxide film 12, the diaphragm 14, and the physical quantity sensor 40 which are illustrated in Fig. 2 are omitted, and indications of a wiring 32, a piezoelectric element 34, and the second bonding portion 16 which are not illustrated in Fig. 2 are illustrated. In Fig. 3, the second bonding portion 16 is indicated by hatching. The second bonding portion 16 is a region facing the upper surface 13.

The sensor apparatus 100 may include the wiring 32 and the piezoelectric element 34. The wiring 32 may be a metal wiring. The piezoelectric element 34 is an element in which a resistance varies due to a force such as a pressure applied to the diaphragm 14 (see

Fig. 2). The pad portion 30 and the physical quantity sensor 40 may be electrically connected by the wiring 32. In the present example, the piezoelectric element 34 and the pad portion 30 are connected by the wiring 32.

The sealed space 92 and the concave portion 90 (see Fig. 1) may be surrounded by the second bonding portion 16 in the top view. In the top view, the second bonding portion 16 may be arranged between a plurality of the pad portions 30. In the present example, the second bonding portion 16 is arranged between the pad portion 30-1 and the pad portion 30-2 (see Fig. 2) and between the pad portion 30-4 and the pad portion 30-5 (see Fig. 2) in the X axis direction. In the present example, the second bonding portion 16 is arranged between the pad portion 30-1 and the pad portion 30-3 (see Fig. 2) and between the pad portion 30-2 and the pad portion 30-5 (see Fig. 2) in the Y axis direction.

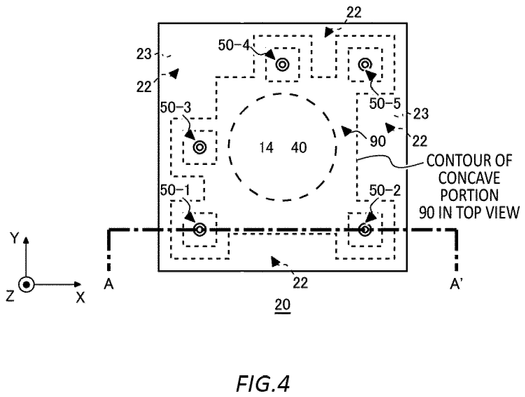

Fig. 4 illustrates an example of the top view of the glass substrate 20 in the sensor apparatus 100 of Fig. 1. In Fig. 4, positions of the diaphragm 14 and the physical quantity sensor 40 which are illustrated in Fig. 2 are indicated by rough broken lines. In Fig. 4, a position of the pad portion 30 is indicated by a fine broken line.

In Fig. 4, a position of a contour of the concave portion 90 provided to the glass substrate 20 is indicated by a fine broken line. In Fig. 4, a region surrounded by the fine broken line is a position of the concave portion 90 in the top view. In Fig. 4, a region outside the region surrounded by the fine broken line is the first bonding portion 22. The first bonding portion 22 is a region facing the lower surface 23.

The sealed space 92 and the concave portion 90 (see Fig. 1) may be surrounded in the first bonding portion 22 in the top view. In the top view, the first bonding portion 22 may be arranged between the plurality of pad portions 30. In the present example, the second bonding portion 16 is arranged between the pad portion 30-1 and the pad portion 30-2 (see Fig. 2) and between the pad portion 30-4 and the pad portion 30-5 (see Fig. 2) in the X axis direction. In the present example, the second bonding portion 16 is arranged between the pad portion 30-1 and pad portion 30-3 (see Fig. 2) and between the pad portion 30-2 and the pad portion 30-5 (see Fig. 2) in the Y axis direction.

In the present example, five through holes 50 (a through hole 50-1 to a through hole 50-5) are provided to the glass substrate 20. In Fig. 4, positions of the through hole 50-1 to the through hole 50-5 in the top view are indicated by solid lines.

Note that Fig. 1 is a cross-sectional view along the A-A' line illustrated in Fig. 4. The positions in the top view along the A-A' line illustrated in Fig. 4 are the same as the positions in the top view along the A-A' line illustrated in Fig. 2. In Fig. 4, an A-A' cross section is an XZ cross section through the glass substrate 20, the concave portion 90, the through hole 50-1, and the through hole 50-2.

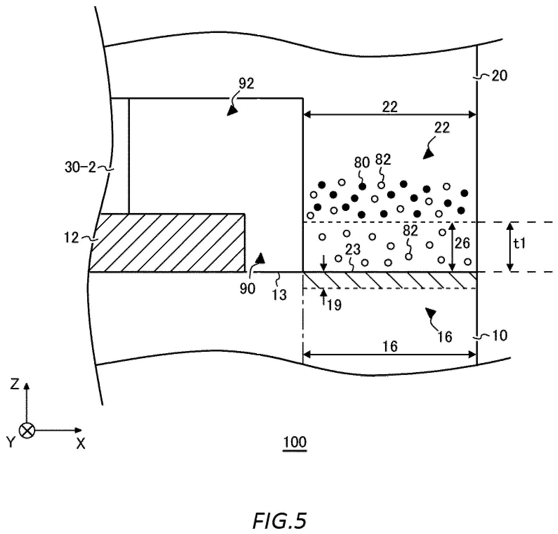

Fig. 5 is an enlarged view of the first bonding portion 22 of the glass substrate 20 and the second bonding portion 16 of the semiconductor substrate 10 in Fig. 1. The concave portion 90 is sealed by bonding the upper surface 13 of the first bonding portion 22 to the lower surface 23 of the second bonding portion 16. The glass substrate 20 has a cation depletion layer 26 in the first bonding portion 22. In Fig. 5, a cation 80 contained in the glass substrate 20 is indicated by a black circle, and O²⁻ (oxygen ion) 82 is indicated by a white circle. The cation 80 may be an alkali ion. The cation 80 is, for example, Na⁺ (sodium ion).

A concentration of the cation 80 in the cation depletion layer 26 is set as a concentration Dd. A concentration of the cation 80 in the glass substrate 20 is set as a concentration Dn. The concentration Dd is lower than the concentration Dn. The concentration Dn is a concentration of the cation 80 in the glass substrate 20 before the semiconductor substrate 10 is bonded to the glass substrate 20. After the semiconductor substrate 10 is bonded to the glass substrate 20, the concentration Dn may be a concentration of the cation 80 in a portion except for the cation depletion layer 26 in the glass substrate 20, or may be a concentration of the cation 80 in a portion except for the first bonding portion 22.

The glass substrate 20 has the cation depletion layer 26 for the lower surface 23 in contact with the second bonding portion 16 in the first bonding portion 22. The cation depletion layer 26 may include the lower surface 23.

The semiconductor substrate 10 may have an oxide layer 19 in the second bonding portion 16. In Fig. 5, the oxide layer 19 is indicated by hatching. The oxide layer 19 may be a layer of an oxide of oxygen and a semiconductor contained in the semiconductor substrate 10. The oxygen may be the O²⁻ (oxygen ion) 82 contained in the glass substrate 20. The semiconductor substrate 10 may have the oxide layer 19 provided to the upper surface 13 in contact with the first bonding portion 22 in the second bonding portion 16. The oxide layer 19 may include the upper surface 13.

A width in the X axis direction of the second bonding portion 16 may be equal to a width in the X axis direction of the first bonding portion 22. A width in the X axis direction of the oxide layer 19 may be equal to a width in the X axis direction of the second bonding portion 16. In Fig. 5, a position of an end portion of the second bonding portion 16 closer to a center in the X axis direction of the semiconductor substrate 10 is indicated by an alternate long and short dash line.

The first bonding portion 22 may be bonded to the second bonding portion 16 by anodic bonding. During a period of the anodic bonding between the first bonding portion 22 and the second bonding portion 16, the cation 80 in the first bonding portion 22 moves in a direction to be spaced away from the lower surface 23. Thus, when the first bonding portion 22 is bonded to the second bonding portion 16 by anodic bonding, the glass substrate 20 is likely to have the cation depletion layer 26 for the lower surface 23 in contact with the second bonding portion 16 in the first bonding portion 22. When the first bonding portion 22 is bonded to the second bonding portion 16 by anodic bonding, the concentration Dn of the cation 80 in the glass substrate 20 may be a concentration of the cation 80 in the glass substrate 20 before the first bonding portion 22 and the second bonding portion 16 are subjected to anodic bonding.

During a period of the anodic bonding between the first bonding portion 22 and the second bonding portion 16, the O²⁻ (oxygen ion) 82 present in the vicinity of the lower surface 23 moves in a direction from the upper surface 24 (see Fig. 1) to the lower surface 23. Thus, when the first bonding portion 22 is bonded to the second bonding portion 16 by anodic bonding, the semiconductor substrate 10 is likely to have the oxide layer 19 for the upper surface 13 in contact with the first bonding portion 22 in the second bonding portion 16.

A thickness of the cation depletion layer 26 is set as a thickness t1. The thickness t1 may be 0.2 µm or more and 3.0 µm or less, or may be 0.4 µm or more and 2.0 µm or less.

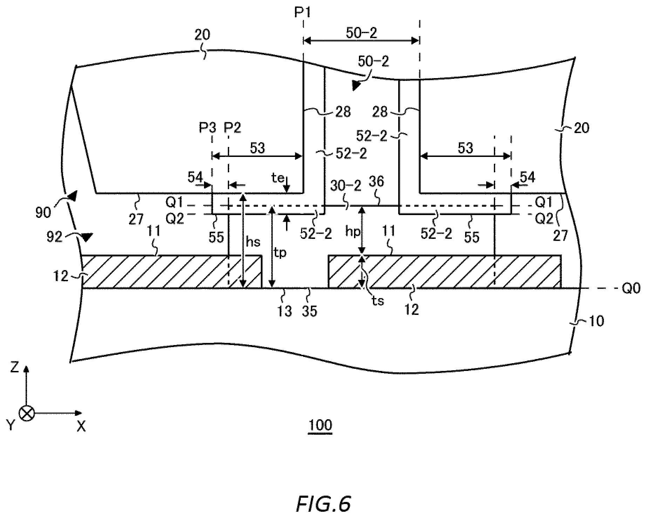

Fig. 6 is an enlarged view in the vicinity of the through hole 50-2 and the pad portion 30-2 in Fig. 1. It it noted however that in Fig. 6, the wiring 32 illustrated in Fig. 3 is omitted. The metal film 52 is provided to a side wall 28 of the through hole 50. A lower surface that is a lower surface of the glass substrate 20 and that is in contact with the sealed space 92 is set as the lower surface 27. The through hole 50 may be provided from the upper surface 24 to the lower surface 27 of the glass substrate 20.

The metal film 52 may include an extension portion 53. The extension portion 53 is provided to extend from the side wall 28 of the through hole 50 to the lower surface 27. The extension portion 53 may be in contact with the lower surface 27. The metal film 52 may be continuously provided along the side wall 28 and the lower surface 27 from a position of the upper surface 24 in the Z axis direction.

A position of the side wall 28 closer to a center of the glass substrate 20 in the top view in the X axis direction is set as a position P1. An end portion position that is an end portion position of the pad portion 30 in the X axis direction and that is closer to the center of the glass substrate 20 in the top view is set as a position P2. An end portion position that is an end portion position of the extension portion 53 in the X axis direction and that is closer to the center of the glass substrate 20 in the top view is set as a position P3. Note that the extension portion 53 is the metal film 52 between the position P1 and the position P3 in the X axis direction.

The pad portion 30 is formed of a metal. The metal film 52 is in contact with the pad portion 30. In the present example, the extension portion 53 is in contact with the pad portion 30. Since the metal film 52 is in contact with the pad portion 30 formed of the metal, a current flowing through the wiring 32 (see Fig. 3) is to flow into the metal film 52. When the metal film 52 does not include the extension portion 53, the pad portion 30 may be in contact with the metal film 52 provided to the side wall 28 at a position of the lower surface 27 in the Z axis direction.

The extension portion 53 may include a metal film outer circumferential portion 54. The metal film outer circumferential portion 54 is the extension portion 53 between the position P2 and the position P3 in the X axis direction. In the present example, the metal film outer circumferential portion 54 is in contact with the sealed space 92. The metal film outer circumferential portion 54 is not overlapped with the pad portion 30 in the top view.

A position of the pad portion 30 in the Z axis direction that is position farthest from the semiconductor substrate 10 in the Z axis direction is set as a position Q1, and that is a position farthest from the glass substrate 20 in the Z axis direction is set as a position Q0. An upper surface of the pad portion 30 is set as an upper surface 36. The upper surface 36 is a planar region including the position Q1. A lower surface of the pad portion 30 is set as a lower surface 35. The lower surface 35 is a planar region including the position Q0. A position of the extension portion 53 in the Z axis direction that is a position farthest from the glass substrate 20 in the Z axis direction is set as a position Q2. A lower surface of the extension portion 53 is set as a lower surface 55. The lower surface 55 is a planar region including the position Q2. An upper surface of the oxide film 12 is set as an upper surface 11. A distance from the upper surface 11 to the upper surface 36 of the pad portion 30 is set as a distance hp.

A thickness of the oxide film 12 is set as a thickness ts. A thickness of the pad portion 30 is set as a thickness tp. The thickness tp refers to a thickness from the lower surface 35 to the upper surface 36 of the pad portion 30 in a region where the pad portion 30 is not overlapped with the oxide film 12 in the top view. The thickness tp refers to a sum of the thickness ts and a height hp in a region where the pad portion 30 is overlapped with the oxide film 12 in the top view. The thickness tp may be a distance from the upper surface 13 of the semiconductor substrate 10 to the upper surface 36 of the pad portion 30.

A thickness of the extension portion 53 is set as a thickness te. A height of the sealed space 92 is set as a height hs. The height hs is a height of the sealed space 92 in a position overlapped with the pad portion 30 in the top view. In the present example, the height hs is a height from the upper surface 13 of the semiconductor substrate 10 to the lower surface 27 of the glass substrate 20.

A sum of the thickness tp and the thickness te may be greater than the height hs. Since the sum of the thickness tp and the thickness te is greater than the height hs, when the first bonding portion 22 (see Fig. 1) of the glass substrate 20 is bonded to the second bonding portion 16 (see Fig. 1) of the semiconductor substrate 10, the position Q2 is likely to be arranged below the position Q1.

The lower surface 55 of the metal film outer circumferential portion 54 may be arranged below the upper surface 36 of the pad portion 30. That is, the position Q2 may be below the position Q1. When the first bonding portion 22 (see Fig. 1) and the second bonding portion 16 (see Fig. 1) are subjected to anodic bonding, a force in a direction from the glass substrate 20 to the semiconductor substrate 10 in the Z axis direction is applied to the glass substrate 20. Since the extension portion 53 includes the metal film outer circumferential portion 54 and also the force in the direction from the glass substrate 20 to the semiconductor substrate 10 is applied, the lower surface 55 of the metal film outer circumferential portion 54 is likely to be arranged below the upper surface 36 of the pad portion 30. As a result, the through hole 50 is likely to be sealed by the pad portion 30.

The sum of the thickness tp and the thickness te may be 1.1 times or more and 1.3 times or less as large as the height hs. The thickness tp may be 1.2 µm or more and 1.3 µm or less. The thickness te may be 0.3 µm or more and 0.5 µm or less. The height hs may be 1.2 µm or more and 1.5 µm or less.

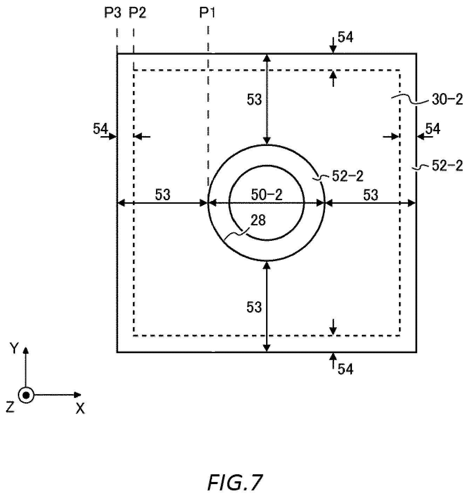

Fig. 7 is a diagram of the through hole 50-2 and the pad portion 30-2 in Fig. 6 in the top view. In Fig. 7, a position of an outer edge of the pad portion 30-2 in the top view is indicated by a broken line. In the top view, an area of the metal film 52 may be greater than an area of the pad portion 30. The pad portion 30 may be surrounded by the metal film 52 in the top view. Since the pad portion 30 is surrounded by the metal film 52 in the top view, when the first bonding portion 22 (see Fig. 1) and the second bonding portion 16 (see Fig. 1) are subjected to anodic bonding, the lower surface 55 of the metal film 52 is likely to be adhered over an entire surface of the upper surface 36 of the pad portion 30. As a result, the through hole 50 is likely to be sealed by the pad portion 30.

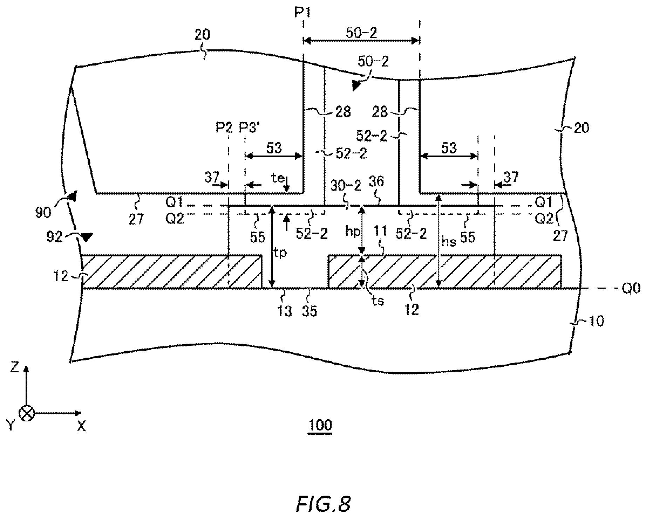

Fig. 8 is another enlarged view in the vicinity of the through hole 50-2 and the pad portion 30-2 in Fig. 1. An end portion position of the extension portion 53 in the X axis direction that is an end portion position closer to the center of the glass substrate 20 in the top view is set as a position P3'. In the present example, the position P3' is arranged to be closer to the through hole 50 in the X axis direction than the position P2. The present example is different from the example illustrated in Fig. 6 in the above described aspect.

In the present example, the pad portion 30 includes a pad outer circumferential portion 37. The pad outer circumferential portion 37 is the pad portion 30 between the position P3' and the position P2 in the X axis direction. In the present example, the pad outer circumferential portion 37 is in contact with the sealed space 92. **In** the present example, the pad outer circumferential portion 37 is not overlapped with the metal film 52 in the top view. In the present example, the pad outer circumferential portion 37 is not overlapped with the extension portion 53 in the top view.

The upper surface 36 of the pad outer circumferential portion 37 may be arranged above the lower surface 55 of the extension portion 53. That is, the position Q1 may be above the position Q2. As described above, when the first bonding portion 22 (see Fig. 1) and the second bonding portion 16 (see Fig. 1) are subjected to anodic bonding, the force in the direction from the glass substrate 20 to the semiconductor substrate 10 in the Z axis direction is applied to the glass substrate 20. Since the pad portion 30 includes the pad outer circumferential portion 37 and also the force in the direction from the glass substrate 20 to the semiconductor substrate 10 is applied, the upper surface 36 of the pad outer circumferential portion 37 is likely to be arranged above the lower surface 55 of the extension portion 53. As a result, the through hole 50 is likely to be sealed by the pad portion 30.

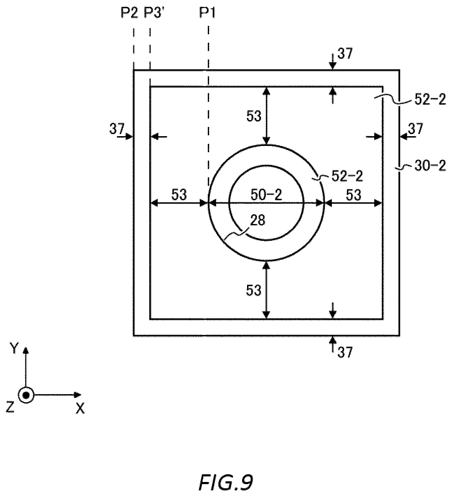

Fig. 9 is a diagram of the through hole 50-2 and the pad portion 30-2 in Fig. 8 in the top view. In the present example, an area of the pad portion 30 in the top view is greater than an area of the metal film 52 in the top view. The metal film 52 may be surrounded by the pad portion 30 in the top view. Since the metal film 52 is surrounded by the pad portion 30 in the top view, when the first bonding portion 22 (see Fig. 1) and the second bonding portion 16 (see Fig. 1) are subjected to anodic bonding, the upper surface 36 of the pad portion 30 is likely to be adhered over an entire surface of the lower surface 55 of the metal film 52. As a result, the through hole 50 is likely to be sealed by the pad portion 30.

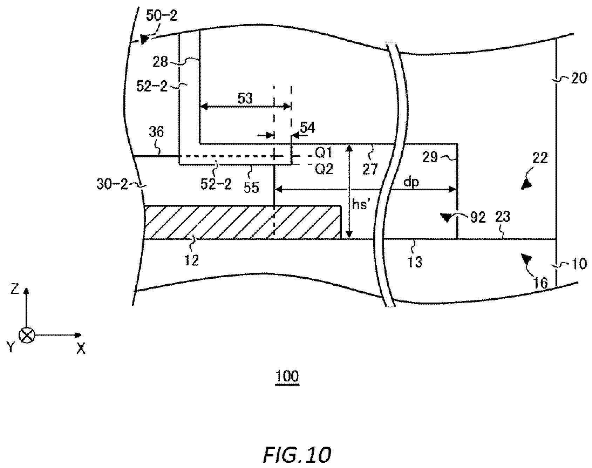

Fig. 10 is an enlarged view in the vicinity of the through hole 50-2, the pad portion 30-2, the first bonding portion 22, and the second bonding portion 16 in Fig. 1. An inner side surface 29 is a side surface that is in contact with the sealed space 92 and that is inside the glass substrate 20. The inner side surface 29 may be a surface intersecting with the upper surface 13, or may be a surface orthogonal to the upper surface 13. In the present example, the inner side surface 29 is orthogonal to the upper surface 13.

A distance from the inner side surface 29 of the glass substrate 20 to the pad portion 30 in an in-plane direction of the semiconductor substrate 10 is set as a distance dp. When the sensor apparatus 100 includes a plurality of pad portions 30, the distance dp is a distance between the inner side surface 29 and the pad portion 30 arranged at a shortest distance from the inner side surface 29. In the present example, the distance dp refers to a shortest distance among distances in the XY in-plane direction from the inner side surface 29 to one of the pad portions 30.

A height of the sealed space 92 is set as a height hs'. The height hs' is a height of the sealed space 92 between the inner side surface 29 and the pad portion 30 arranged to be spaced away from the inner side surface 29 by the distance dp. Note that in the present example, the height hs' is equal to the height hs illustrated in Fig. 6 and Fig. 8.

The distance dp may be greater than the height hs'. As described above, when the first bonding portion 22 (see Fig. 1) and the second bonding portion 16 (see Fig. 1) are subjected to anodic bonding, the force in the direction from the glass substrate 20 to the semiconductor substrate 10 in the Z axis direction is applied to the glass substrate 20. When the force in the above described direction is applied to the glass substrate 20 and also the sum of the thickness tp and the thickness te is greater than the height hs (see Fig. 6 and Fig. 8), the force in the direction (the Z axis direction) from the semiconductor substrate 10 to the glass substrate 20 is likely to be applied between the through hole 50-2 an the first bonding portion 22 in the glass substrate 20. In a case where the distance dp is greater than the height hs', the above described force in the direction (the Z axis direction) from the semiconductor substrate 10 to the glass substrate 20 is more likely to be relaxed as compared with a case where the distance dp is less than the height hs'. Thus, damage to the glass substrate 20 is likely to be suppressed.

The distance dp may be 20 times or more and 200 times or less as large as the height hs', may be 50 times or more and 100 times or less as large as the height hs', or may be 60 times or more and 90 times or less as large as the height hs'.

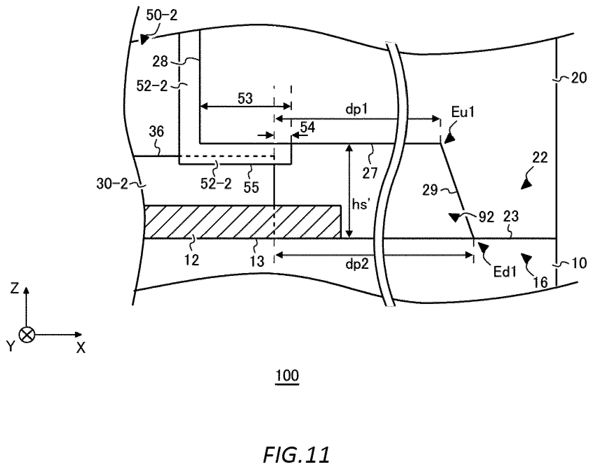

Fig. 11 is another enlarged view in the vicinity of the through hole 50-2, the pad portion 30-2, the first bonding portion 22, and the second bonding portion 16 in Fig. 1. In the present example, the inner side surface 29 is intersecting with the upper surface 13, and also the inner side surface 29 is not orthogonal to the upper surface 13. The present example is different from the example illustrated in Fig. 10 in the above described aspect.

An upper end of the inner side surface 29 is set as an upper end Eu1. A lower end of the inner side surface 29 is set as a lower end Ed1. The distance dp (see Fig. 10) may increase from the upper end Eu1 towards the lower end Ed1. The inner side surface 29 may be tapered in the side view.

As described above, when the force in the direction from the glass substrate 20 to the semiconductor substrate 10 in the Z axis direction is applied to the glass substrate 20 and also the sum of the thickness tp and the thickness te is greater than the height hs (see Fig. 6 and Fig. 8), the force in the direction (the Z axis direction) from the semiconductor substrate 10 to the glass substrate 20 is likely to be applied at the position of the through hole 50-2 in the X axis direction. Thus, forces in opposite directions parallel to the Z axis are likely to be applied to the glass substrate 20 above the lower surface 27 on the through hole 50-2 side and on the first bonding portion 22 side in the X axis direction. Thus, distortion caused by the above described forces in the opposite directions is likely to be generated for the glass substrate 20 above the lower surface 27. In the present example, since the distance dp (see Fig. 10) increases from the upper end Eu1 towards the lower end Ed1, the glass substrate 20 above the lower surface 27 is more likely to warp. As a result, when distortion is generated for the glass substrate 20, the distortion is likely to be relaxed.

A distance from the inner side surface 29 to the pad portion 30 in the in-plane direction of the semiconductor substrate 10 that is a distance from the upper end Eu1 to the pad portion 30 is set as a distance dp1. The distance dp1 may be a minimum value of the distance dp. A distance from the inner side surface 29 to the pad portion 30 in the in-plane direction of the semiconductor substrate 10 that is a distance from the lower end Ed1 to the pad portion 30 is set as a distance dp2. The distance dp2 may be a maximum value of the distance dp. In the Z axis direction, a position of the lower end Ed1 may be the same as a position of the lower surface 23 of the glass substrate 20, and may be the same as a position of the upper surface 13 of the semiconductor substrate 10.

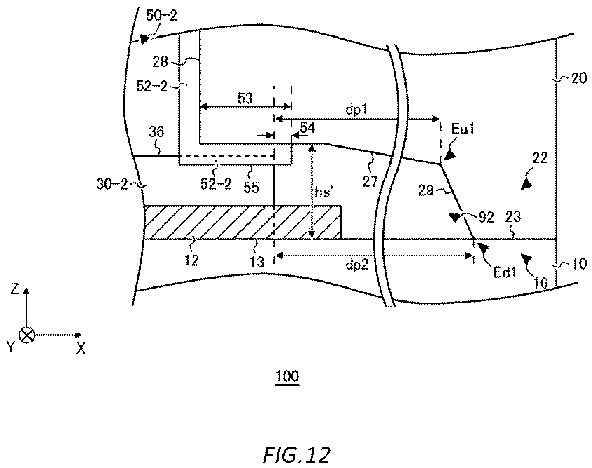

Fig. 12 is another enlarged view in the vicinity of the through hole 50-2, the pad portion 30-2, the first bonding portion 22, and the second bonding portion 16 in Fig. 1. A part of the lower surface 27 may be tilted from the pad portion 30 towards the inner side surface 29. In the present example, the height hs' decreases from the pad portion 30 towards the inner side surface 29 in the above described part of the lower surface 27. In the present example, the above described part of the lower surface 27 is not parallel to the upper surface 13 of the semiconductor substrate 10. The present example is different from the example illustrated in Fig. 11 in the above described aspect.

In the present example, a part of the lower surface 27 which is in contact with the sealed space 92 after the semiconductor substrate 10 is bonded to the glass substrate 20 is tilted from the pad portion 30 towards the inner side surface 29, and another part of the lower surface 27 is parallel to the upper surface 13. The other part of the lower surface 27 is a part of the lower surface 27 which is in contact with the extension portion 53.

In the present example, since the part of the lower surface 27 is tilted from the pad portion 30 towards the inner side surface 29, similarly as in the example illustrated in Fig. 11, when the first bonding portion 22 (see Fig. 1) is bonded to the second bonding portion 16 (see Fig. 1), the glass substrate 20 above the lower surface 27 is likely to warp. As a result, when distortion is generated for the glass substrate 20, the distortion is likely to be relaxed.

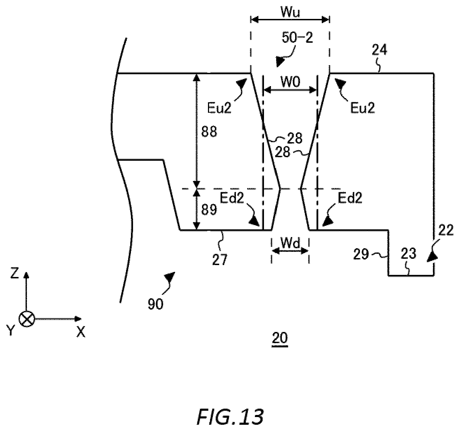

Fig. 13 is another enlarged view in the vicinity of the through hole 50-2 in the glass substrate 20. In Fig. 13, a position of the through hole 50-2 in Fig. 1 is indicated by an alternate long and short dash line. In Fig. 13, the metal film 52 illustrated in Fig. 1 is omitted.

In the present example, an upper end of the through hole 50-2 is set as an upper end Eu2, and a lower end of the through hole 50-2 is set as a lower end Ed2. The upper end Eu2 is an upper end of the through hole 50-2 where the upper surface 24 and the side wall 28 of the through hole 50-2 are intersecting with each other. The lower end Ed2 is a lower end of the through hole 50-2 where the lower surface 27 and the side wall 28 of the through hole 50-2 are intersecting with each other. A position of the upper end Eu2 in the Z axis direction may be the same as the position of the upper surface 24 in the Z axis direction. A position of the lower end Ed2 in the Z axis direction may be the same as the position of the lower surface 27 in the Z axis direction.

The through hole 50 may include a first section 88 where a width of the through hole 50 decreases from the upper end Eu2 towards the bottom and a second section 89 where the width of the through hole 50 decreases from the lower end Ed2 towards the top. The above described width of the through hole 50 refers to a width in the X axis direction in the present example. The first section 88 and the second section 89 may be provided to the glass substrate 20. The first section 88 may be tapered in a manner that the width of the through hole 50 widens from the bottom towards the top. The second section 89 may be tapered in a manner that the width of the through hole 50 widens from the top towards the bottom.

The first section 88 may be provided above the second section 89. The first section 88 may be connected to the second section 89. A lower end of the first section 88 may be connected to an upper end of the second section 89. A position of the lower end of the first section 88 may be the same as a position of the upper end of the second section 89 in the Z axis direction.

In the present example, a width of the through hole 50-2 in the X axis direction at an upper end Ed2 is set as a width Wu. The width of the through hole 50-2 at the upper end Ed2 refers to a width of the through hole 50-2 at a position of the upper end Ed2 in the Z axis direction. In the present example, a width of the through hole 50-2 at the lower end Ed2 in the X axis direction is set as a width Wd. The width of the through hole 50-2 at the lower end Ed2 refers to a width of the through hole 50-2 at a position of the lower end Ed2 in the Z axis direction. A width of the through hole 50-2 in the X axis direction in Fig. 1 is set as a width WO.

The width Wd may be less than the width WO. Since the width Wd is less than the width WO, an area of the upper surface 36 (see Fig. 6 and Fig. 8) of the pad portion 30 is likely to be less than an area of the upper surface 36 of the pad portion 30 illustrated in Fig. 1. Thus, the pad portion 30 in the present example is more likely to be miniaturized as compared with the pad portion 30 illustrated in Fig. 1.

The width Wu may be greater than the width Wd. When the width Wd is less than the width WO, since the width Wu is greater than the width Wd and also the width Wu is greater than the width WO, an area of the side wall 28 is likely to be greater than an area of the side wall 28 illustrated in Fig. 1. Thus, an area of the metal film 52 provided to the side wall 28 is likely to be greater than an area of the metal film 52 illustrated in Fig. 1. Thus, a resistance value of the metal film 52 is likely to be less than a resistance value of the metal film 52 illustrated in Fig. 1.

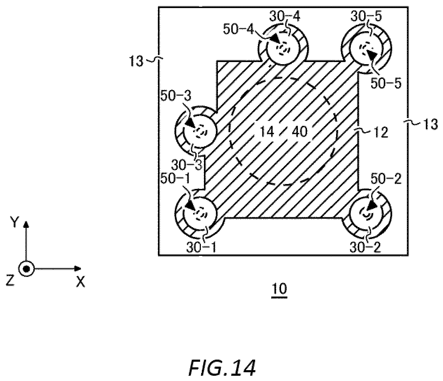

Fig. 14 illustrates another example of the top view of the semiconductor substrate 10 in the sensor apparatus 100 of Fig. 1. In the present example, the pad portion 30 is circular in the top view. The present example is different from the sensor apparatus 100 illustrated in Fig. 2 in the above described aspect. Being circular is not limited to being perfectly circular, and does refer to a state in which a surrounding of the pad portion 30 in the top view is arcuate such as being elliptic. A shape of the surrounding may include arcs of different circles with a plurality of radii of curvature.

When the pad portion 30 is circular in the top view, a shape of the oxide film 12 arranged to the surrounding of the pad portion 30 in the top view may also be circular in the top view, and a shape of a bonding region 16 (see Fig. 3) arranged in the surrounding of the oxide film 12 in the top view may also be circular. Since the pad portion 30 and the bonding region 16 are circular in the top view, when the first bonding portion 22 is bonded to the second bonding portion 16, a uniform pressure is likely to be generated to the pad portion 30 in the XY plane, and also a uniform pressure is likely to be generated to the bonding region 16 in the XY plane.

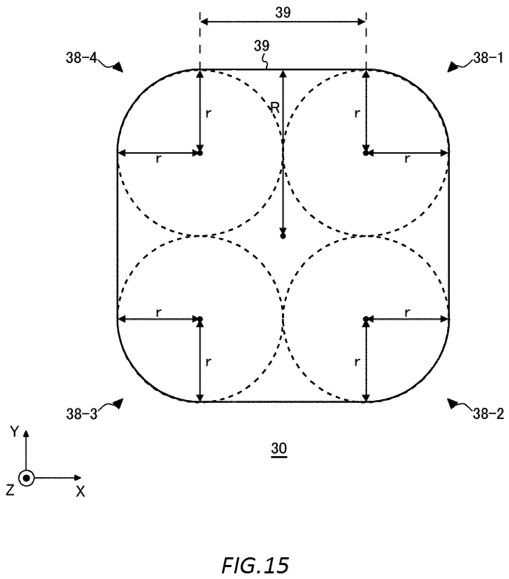

Fig. 15 is an enlarged view of the single pad portion 30 in the sensor apparatus 100 of Fig. 1 in the top view. In the present example, a corner portion 38 of the pad portion 30 is circular. In the present example, the pad portion 30 includes four corner portions 38 (a corner portion 38-1 to a corner portion 38-4).

A diameter of the pad portion 30 is set as a diameter R. The diameter R may be a maximum distance among distances to the outer edge in the XY plane of the pad portion 30 from a center of the pad portion 30. The center of the pad portion 30 may be a center of gravity of a shape of the pad portion 30 in the top view.

A radius of curvature of the corner portion 38 is set as a radius of curvature "r". In Fig. 15, a circle with the radius of curvature r is indicated by a broken line. The radius of curvature r may be 0.1 times or more and 1.0 times or less as large as the diameter R, and may be 0.2 times or more and 1.0 times or less as large as the diameter R. When the metal film 52 (see Fig. 6) is bonded to the pad portion 30, a pressure is generated in the plane of the upper surface 36 (see Fig. 6) of the pad portion 30 and in the plane of the lower surface 55 (see Fig. 6) of the extension portion 53 (see Fig. 6). Since the radius of curvature r is 0.1 times or more as large as the diameter R, the pressure in the plane of the upper surface 36 and in the plane of the lower surface 55 (see Fig. 6) is more likely to be uniform as compared with a case where the radius of curvature r is less than 0.1 times as large as the diameter R. Thus, adhesion between the upper surface 36 and the lower surface 55 is likely to be improved. Thus, sealing properties of the sealed space 92 is likely to be improved. Note that a case where the radius of curvature r is 1.0 time as large as the diameter R is a case where the pad portion 30 is perfectly circular in the top view.

An outer circumference of the pad portion 30 in the top view may include the corner portion 38 with the radius of curvature r and a linear section 39. A state in which the pad portion 30 is circular in the top view may include a state in which the corner portion 38 with the radius of curvature r and the linear section 39 are included.

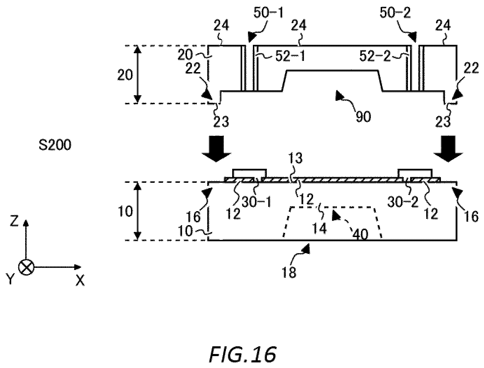

Fig. 16 illustrates an example of a method of fabricating the sensor apparatus 100 according to an embodiment of the present invention. The method of fabricating the sensor apparatus 100 includes bonding step S200. The bonding step S200 is a step of performing anodic bonding between the semiconductor substrate 10 and the glass substrate 20. The physical quantity sensor 40 and the pad portion 30 are provided to the semiconductor substrate 10. The pad portion 30 is electrically connected to the physical quantity sensor 40.

The concave portion 90 is provided to the glass substrate 20. In the present example, the concave portion 90 is provided to the glass substrate 20. The bonding step S200 is a step of sealing the concave portion 90 by preforming anodic bonding between the first bonding portion 22 and the second bonding portion 16, and is also a step of sealing the physical quantity sensor 40 and the pad portion 30. By the bonding step S200, the sensor apparatus 100 (see Fig. 1) is fabricated.

As illustrated in Fig. 3, in the top view, the through hole 50 is provided to the glass substrate 20. As illustrated in Fig. 3 and Fig. 6, the glass substrate 20 has the metal film 52 provided to the side wall 28 of the through hole 50. The pad portion 30 is formed of a metal.

The bonding step S200 is a step of sealing the physical quantity sensor 40 and the pad portion 30 by performing anodic bonding between the first bonding portion 22 and the second bonding portion 16, and is also a step of sealing the through hole 50 by the pad portion 30. As a result, in accordance with the method of fabricating the sensor apparatus 100, the sealing of the physical quantity sensor 40 and the pad portion 30 and the sealing of the through hole 50 by the pad portion 30 can be implemented by a single step.

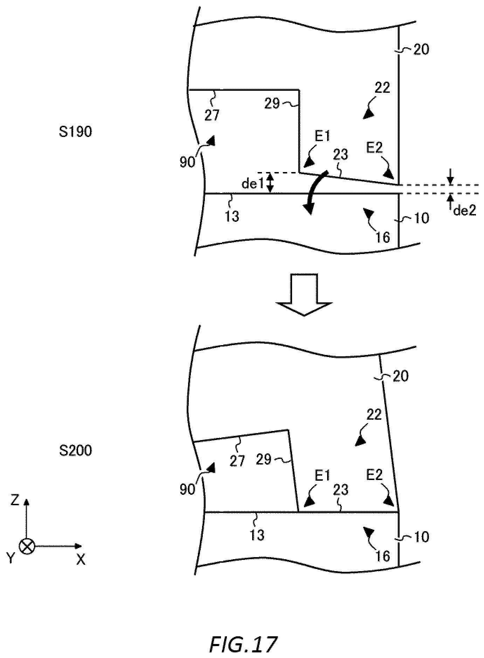

Fig. 17 illustrates another example of the method of fabricating the sensor apparatus 100 according to an embodiment of the present invention. Fig. 17 illustrates an expanded view of the vicinity of the first bonding portion 22 of the glass substrate 20 and the second bonding portion 16 of the semiconductor substrate 10. In the present example, the method of fabricating the sensor apparatus 100 further includes arrangement step S190 before the bonding step S200.

One end closer to the physical quantity sensor 40 in the lower surface 23 of the first bonding portion 22 is set as one end E1. An other end in the lower surface 23 of the first bonding portion 22 is set as an other end E2. The other end E2 is an end portion of the lower surface 23 arranged to be further spaced away from the physical quantity sensor 40 than the one end E1. In the present example, the one end E1 and the other end E2 are respectively one end and the other end of the lower surface 23 in the X axis direction. In the arrangement step S190, the one end E1 and the other end E2 may be arranged to be spaced away from the upper surface 13 of the semiconductor substrate 10.

A distance between the upper surface 13 and the one end E1 in a direction intersecting with the upper surface 13 of the semiconductor substrate 10 (in the present example, the Z axis direction) is set as a distance de1, and a distance between the upper surface 13 and the other end E2 is set as a distance de2. The one end E1 and the other end E2 may be arranged such that the distance de1 becomes greater than the distance de2. In the arrangement step S190, the one end E1 may be arranged to be closer to the upper surface 24 (see Fig. 16) in the Z axis direction than the other end E2. Note that the other end E2 may be arranged in contact with the upper surface 13. That is, the distance de2 may be zero.

In the present example, in the arrangement step S190, the one end E1 and the other end E2 are arranged such that the distance de1 becomes greater than the distance de2. Thus, when the bonding step S200 is a step of performing anodic bonding between the first bonding portion 22 and the second bonding portion 16, the first bonding portion 22 and the second bonding portion 16 are to suction by electrostatic force. Thus, the other end E2 is likely to come into contact with the upper surface 13 earlier than the one end E1. After the contact of the other end E2 with the upper surface 13, the lower surface 23 is likely to rotate about the other end E2 in a direction to the semiconductor substrate 10. A direction of this rotation is indicated by a bold arrow in the arrangement step S190 in Fig. 17.

In the present example, after the lower surface 23 has rotated in the bonding step S200 as described above, the first bonding portion 22 and the second bonding portion 16 are subjected to anodic bonding. As a result, as compared with a case where the one end E1 and the other end E2 are arranged in a same position in the Z axis direction in the arrangement step S190, a force in the direction from the glass substrate 20 to the semiconductor substrate 10 is more likely to be applied to the lower surface 27 of the glass substrate 20. Thus, the through hole 50 (see Fig. 16) is likely to be more reliably sealed by the pad portion 30 (see Fig. 16).

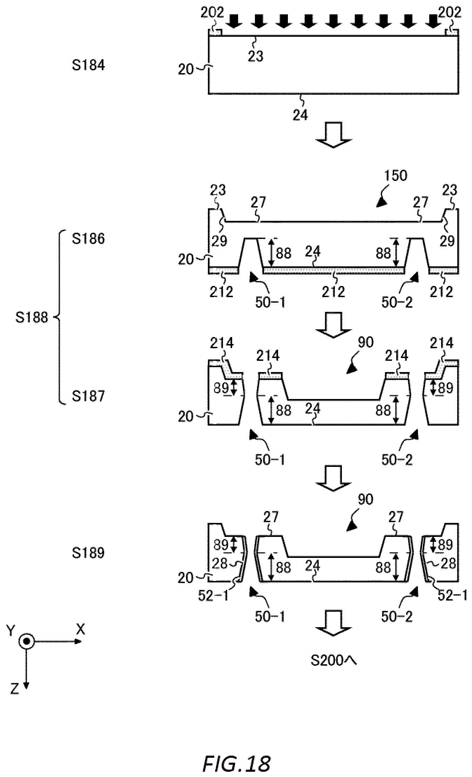

Fig. 18 illustrates another example of the method of fabricating the sensor apparatus 100 according to an embodiment of the present invention. The method of fabricating the sensor apparatus 100 may further include, before the bonding step S200, etching step S184 of forming a concave portion 150 to the glass substrate 20 by wet etching. In the present example, the etching step S184 is a step of forming the concave portion 150 to the glass substrate 20 by wet etching.

The etching step S184 is a step of performing wet etching of the lower surface 23 of the glass substrate 20. In the etching step S184, a mask 202 may be provided to the lower surface 23. The etching step S184 may be a step of forming the concave portion 150 by immersing the glass substrate 20 in etching liquid.

By performing wet etching of the lower surface 23 of the glass substrate 20, the side wall 28 illustrated in Fig. 11 is likely to be formed. That is, by performing wet etching of the lower surface 23, the side wall 28 is likely to be formed to be tapered in the side view. The etching step S184 may have, after first etching step S180, a step of removing the mask 202.

The method of fabricating the sensor apparatus 100 may include through hole formation step S188 before the bonding step S200. The through hole formation step S188 may have first section formation step S186 and second section formation step S187.

The first section formation step S186 may be a step of blasting the upper surface 24 of the glass substrate 20. In the first section formation step S186, a mask 212 may be provided to the upper surface 24. The first section formation step S186 may be a step of forming the first section 88 of the through hole 50 by blasting the upper surface 24. The first section formation step S186 may be a step of performing so-called sandblast of the upper surface 24. When the upper surface 24 is blasted, as illustrated in Fig. 13, the first section 88 is likely to be tapered in a manner that the width of the through hole 50 widens from the bottom to the top (in a direction from the lower surface 27 to the upper surface 24). The through hole formation step S188 may have a step of removing the mask 212 after the first section formation step S186.

The second section formation step S187 may be a step of blasting the lower surface 27 of the glass substrate 20. In the second section formation step S187, a mask 214 may be provided to the lower surface 27. The second section formation step S187 may be a step of forming the second section 89 of the through hole 50 and the concave portion 90 by blasting the lower surface 27. The second section formation step S187 may be a step of performing so-called sandblast of the lower surface 27. When the lower surface 27 is blasted, as illustrated in Fig. 13, the second section 89 is likely to be tapered in a manner that the width of the through hole 50 widens from the top to the bottom (in a direction from the upper surface 24 to the lower surface 27). The through hole formation step S188 may have a step of removing the mask 214 after the second section formation step S187.

By the first section formation step S186 and the second section formation step S187, the first section 88 and the second section 89 are formed for the glass substrate 20. As illustrated in Fig. 13, the width Wu of the through hole 50 in the upper end Ed2 in the X axis direction may be greater than the width Wd of the through hole 50 in the lower end Ed2 in the X axis direction.

The method of fabricating the sensor apparatus 100 may have metal film formation step S189 before the bonding step S200. The metal film formation step S189 is step of forming the metal film 52 for the side wall 28 of the through hole 50. The metal film 52 is formed for the side wall 28 from the upper surface 24 towards the lower surface 27. In the method of fabricating the sensor apparatus 100, in the bonding step S200, the semiconductor substrate 10 and the glass substrate 20 on which the metal film 52 has been formed in the metal film formation step S189 may be subjected to anodic bonding.

While the embodiments of the present invention have been described, the technical scope of the present invention is not limited to the above described embodiments. It is apparent to persons skilled in the art that various alterations and improvements can be added to the above described embodiments. It is also apparent from the scope of the claims that the embodiments added with such alterations or improvements can be included in the technical scope of the present invention.

Note that the operations, procedures, steps, and stages of each process performed by an apparatus, system, program, and method shown in the claims, embodiments, or diagrams can be performed in any order as long as the order is not indicated by "prior to," "before," or the like and as long as the output from a previous process is not used in a later process. Even if the process flow is described using phrases such as "first" or "next" in the claims, embodiments, or diagrams, it does not necessarily mean that the process must be performed in this order.

### EXPLANATION OF REFERENCES

10: semiconductor substrate, 12: oxide film, 13: upper surface, 14: diaphragm, 16: second bonding portion, 18: concave portion, 19: oxide layer, 20: glass substrate, 22: first bonding portion, 23: lower surface, 24: upper surface, 26: cation depletion layer, 27: lower surface, 28: side wall, 29: inner side surface, 30: pad portion, 32: wiring, 34: piezoelectric element, 36: upper surface, 37: pad outer circumferential portion, 38: corner portion, 39: linear section, 40: physical quantity sensor, 50: through hole, 52: metal film, 53: extension portion, 54: metal film outer circumferential portion, 55: lower surface, 80: cation, 82: O²⁻(oxygen ion), 88: first section, 89: second section, 90: concave portion, 92: sealed space, 100: sensor apparatus, 150: concave portion, 202: mask, 212: mask, 214: mask.

## Claims

1. A sensor apparatus (100) comprising: a semiconductor substrate (10); a glass substrate (20); a physical quantity sensor (40); and a pad portion (30) electrically connected to the physical quantity sensor (40), wherein:
a concave portion (90) provided to the glass substrate (20) is sealed by bonding a first bonding portion (22) in the glass substrate (20) to a second bonding portion (16) in the semiconductor substrate (10),
the physical quantity sensor (40) and the pad portion (30) are arranged in a sealed space (92) sealed by the semiconductor substrate (10) and the glass substrate (20),
the glass substrate (20) has, in the first bonding portion (22), a cation depletion layer (26) with a cation concentration less than a cation concentration of the glass substrate (20),
in a top view, a through hole (50) is provided to the glass substrate (20) in a position overlapped with the pad portion (30),
the glass substrate (20) has a metal film (52) provided to a side wall (28) of the through hole,
the pad portion (30) is formed of a metal, and
the metal film (52) is in contact with the pad portion (30).

2. The sensor apparatus (100) according to claim 1, wherein the semiconductor substrate (10) has, in the second bonding portion (16), an oxide layer (19) of oxygen and a semiconductor contained in the semiconductor substrate (10).

3. The sensor apparatus (100) according to claim 1, wherein
the metal film (52) includes an extension portion (53) provided to extend from the side wall (28) of the through hole to a lower surface (27) of the glass substrate (20) that is a lower surface in contact with the sealed space (92), and
the extension portion (53) is in contact with the pad portion (30).

4. The sensor apparatus (100) according to claim 3, wherein the pad portion (30) is surrounded by the metal film (52) in the top view.

5. The sensor apparatus (100) according to claim 4, wherein
the extension portion (53) includes a metal film outer circumferential portion (54) in contact with the sealed space (92), and
a lower surface (55) of the metal film outer circumferential portion (54) is arranged below an upper surface (36) of the pad portion (30).

6. The sensor apparatus (100) according to claim 3, wherein the metal film (52) is surrounded by the pad portion (30) in the top view.

7. The sensor apparatus (100) according to claim 6, wherein
the pad portion (30) includes a pad outer circumferential portion (37) in contact with the sealed space (92), and
an upper surface (36) of the pad outer circumferential portion (37) is arranged above a lower surface (55) of the extension portion (53).

8. The sensor apparatus (100) according to any one of claims 3 to 7, wherein a sum of a thickness of the pad portion (30) and a thickness of the extension portion (53) is greater than a height of the sealed space (92) in the position overlapped with the pad portion (30) in the top view.

9. The sensor apparatus (100) according to claim 8, wherein a distance from an inner side surface (29) of the glass substrate (20) to the pad portion (30) in an in-plane direction of the semiconductor substrate (10) is greater than the height of the sealed space (92).

10. The sensor apparatus (100) according to any one of claims 3 to 9, wherein a distance from an inner side surface (29) of the glass substrate (20) to the pad portion (30) increases from an upper end towards a lower end in the inner side surface of the glass substrate (20) in an in-plane direction of the semiconductor substrate (10).

11. The sensor apparatus (100) according to any one of claims 1 to 10, wherein
the through hole (50) includes a first section (88) in which a width of the through hole decreases from an upper end of the through hole towards a bottom, and a second section (89) in which the width of the through hole decreases from a lower end of the through hole towards a top, and
a width of the first section (88) at the upper end of the through hole is greater than a width of the second section (89) at the lower end of the through hole.

12. A method of fabricating a sensor apparatus (100), the method comprising:
bonding a semiconductor substrate (10) provided with a physical quantity sensor (40) and a pad portion (30) electrically connected to the physical quantity sensor (40) to a glass substrate (20) by anodic bonding, wherein
the bonding is sealing a concave portion (90) provided to the glass substrate (20) by performing anodic bonding between a first bonding portion (22) in the glass substrate (20) and a second bonding portion (16) in the semiconductor substrate (10), and is also sealing the physical quantity sensor (40) and the pad portion (30),
a through hole (50) is provided to the glass substrate (20) in a top view,
the glass substrate (20) has a metal film (52) provided to a side wall of the through hole,
the pad portion (30) is formed of a metal, and
the bonding between the first bonding portion (22) and the second bonding portion (16) is also sealing the through hole (50) by the pad portion (30).

13. The method of fabricating the sensor apparatus (100) according to claim 12, wherein
before the bonding,
one end closer to the physical quantity sensor (40) in a lower surface of the first bonding portion (22) and another end arranged to be further spaced away from the physical quantity sensor (40) than the one end are arranged to be spaced away from an upper surface of the semiconductor substrate (10), and
the one end and the other end are arranged in a manner that a distance between the upper surface of the semiconductor substrate (10) and the one end in a direction intersecting with the upper surface of the semiconductor substrate (10) becomes greater than a distance between the upper surface of the semiconductor substrate (10) and the other end, and
in the bonding, after the lower surface of the first bonding portion (22) rotates about the other end in a direction to the semiconductor substrate (10), the first bonding portion (22) and the second bonding portion (16) are subjected to anodic bonding.

## Patentansprüche

1. Sensorvorrichtung (100), aufweisend: ein Halbleitersubstrat (10); ein Glassubstrat (20); einen Physikalische-Größe-Sensor (40); und einen Padabschnitt (30), der mit dem Physikalische-Größe-Sensor (40) elektrisch verbunden ist, wobei:
ein konkaver Abschnitt (90), der an dem Glassubstrat (20) vorgesehen ist, durch Bonden eines ersten Bondingabschnitts (22) in dem Glassubstrat (20) an einen zweiten Bondingabschnitt (16) in dem Halbleitersubstrat (10) abgedichtet ist,
der Physikalische-Größe-Sensor (40) und der Padabschnitt (30) in einem abgedichteten Raum (92) angeordnet sind, der durch das Halbleitersubstrat (10) und das Glassubstrat (20) abgedichtet ist,
das Glassubstrat (20) in dem ersten Bondingabschnitt (22) eine Kationenverarmungsschicht (26) mit einer Kationenkonzentration aufweist, die niedriger ist als die Kationenkonzentration des Glassubstrats (20),
in einer Draufsicht ein Durchgangsloch (50) an dem Glassubstrat (20) in einer sich mit dem Padabschnitt (30) überlappenden Position vorgesehen ist,
das Glassubstrat (20) einen Metallfilm (52) aufweist, der an einer Seitenwand (28) des Durchgangslochs vorgesehen ist,
der Padabschnitt (30) aus einem Metall gebildet ist und
der Metallfilm (52) in Kontakt mit dem Padabschnitt (30) steht.

2. Sensorvorrichtung (100) nach Anspruch 1, wobei das Halbleitersubstrat (10) in dem zweiten Bondingabschnitt (16) eine Oxidschicht (19) aus Sauerstoff und einen in dem Halbleitersubstrat (10) enthaltenen Halbleiter aufweist.

3. Sensorvorrichtung (100) nach Anspruch 1, wobei
der Metallfilm (52) einen Erweiterungsabschnitt (53) aufweist, der derart vorgesehen ist, dass er sich von der Seitenwand (28) des Durchgangslochs zu einer unteren Fläche (27) des Glassubstrats (20) erstreckt, die eine mit dem abgedichteten Raum (92) in Kontakt stehende untere Fläche ist, und
der Erweiterungsabschnitt (53) mit dem Padabschnitt (30) in Kontakt steht.

4. Sensorvorrichtung (100) nach Anspruch 3, wobei der Padabschnitt (30) in der Draufsicht von der Metallfolie (52) umgeben ist.

5. Sensorvorrichtung (100) nach Anspruch 4, wobei
der Erweiterungsabschnitt (53) einen mit dem abgedichteten Raum (92) in Kontakt stehenden Metallfilmaußenumfangsabschnitt (54) aufweist und
eine untere Fläche (55) des Metallfilmaußenumfangsabschnitts (54) unterhalb einer oberen Fläche (36) des Padabschnitts (30) angeordnet ist.

6. Sensorvorrichtung (100) nach Anspruch 3, wobei die Metallfolie (52) in der Draufsicht von dem Padabschnitt (30) umgeben ist.

7. Sensorvorrichtung (100) nach Anspruch 6, wobei
der Padabschnitt (30) einen mit dem abgedichteten Raum (92) in Kontakt stehenden Padaußenumfangsabschnitt (37) aufweist und
eine obere Fläche (36) des Padaußenumfangsabschnitts (37) oberhalb einer unteren Fläche (55) des Erweiterungsabschnitts (53) angeordnet ist.

8. Sensorvorrichtung (100) nach einem der Ansprüche 3 bis 7, wobei eine Summe aus einer Dicke des Padabschnitts (30) und einer Dicke des Erweiterungsabschnitts (53) größer ist als eine Höhe des abgedichteten Raums (92) in der sich mit dem Padabschnitt (30) überlappenden Position in der Draufsicht.

9. Sensorvorrichtung (100) nach Anspruch 8, wobei ein Abstand von einer Innenseitenfläche (29) des Glassubstrats (20) zu dem Padabschnitt (30) in einer Richtung in der Ebene des Halbleitersubstrats (10) größer ist als die Höhe des abgedichteten Raums (92).

10. Sensorvorrichtung (100) nach einem der Ansprüche 3 bis 9, wobei ein Abstand von einer Innenseitenfläche (29) des Glassubstrats (20) zu dem Padabschnitt (30) von einem oberen Ende zu einem unteren Ende in der Innenseitenfläche des Glassubstrats (20) in einer Richtung in der Ebene des Halbleitersubstrats (10) zunimmt.

11. Sensorvorrichtung (100) nach einem der Ansprüche 1 bis 10, wobei
das Durchgangsloch (50) einen ersten Abschnitt (88) aufweist, in dem eine Breite des Durchgangslochs von einem oberen Ende des Durchgangslochs zu einer Unterseite hin abnimmt, und einen zweiten Abschnitt (89), in dem die Breite des Durchgangslochs von einem unteren Ende des Durchgangslochs zu einer Oberseite hin abnimmt, und
eine Breite des ersten Abschnitts (88) am oberen Ende des Durchgangslochs größer ist als eine Breite des zweiten Abschnitts (89) am unteren Ende des Durchgangslochs.

12. Verfahren zur Herstellung einer Sensorvorrichtung (100), wobei das Verfahren umfasst:
Bonden eines Halbleitersubstrats (10), das mit einem Physikalische-Größe-Sensor (40) und einem mit dem Physikalische-Größe-Sensor (40) elektrisch verbundenen Padabschnitt (30) versehen ist, an ein Glassubstrat (20) durch anodisches Bonden, wobei
das Bonden das Abdichten eines an dem Glassubstrat (20) vorgesehenen konkaven Abschnitts (90) durch Ausführen eines anodischen Bondens zwischen einem ersten Bondingabschnitt (22) in dem Glassubstrat (20) und einem zweiten Bondingabschnitt (16) in dem Halbleitersubstrat (10) ist und auch das Abdichten des Physikalische-Größe-Sensors (40) und des Padabschnitts (30) ist,
ein Durchgangsloch (50) an dem Glassubstrat (20) in einer Draufsicht vorgesehen ist und
das Glassubstrat (20) einen Metallfilm (52) aufweist, der an einer Seitenwand des Durchgangslochs vorgesehen ist,
der Padabschnitt (30) aus einem Metall gebildet ist und
das Bonden zwischen dem ersten Bondingabschnitt (22) und dem zweiten Bondingabschnitt (16) auch das Abdichten des Durchgangslochs (50) durch den Padabschnitt (30) ist.

13. Verfahren zur Herstellung der Sensorvorrichtung (100) nach Anspruch 12, wobei
vor dem Bonden
ein Ende, das sich in einer unteren Fläche des ersten Bondingabschnitts (22) näher an dem Physikalische-Größe-Sensor (40) befindet, und ein anderes Ende, das von dem Physikalische-Größe-Sensor (40) weiter beabstandet angeordnet ist als das eine Ende, derart angeordnet sind, dass sie von einer oberen Fläche des Halbleitersubstrats (10) beabstandet sind, und
das eine Ende und das andere Ende derart angeordnet sind, dass ein Abstand zwischen der oberen Fläche des Halbleitersubstrats (10) und dem einen Ende in einer Richtung, die die obere Fläche des Halbleitersubstrats (10) schneidet, größer wird als ein Abstand zwischen der oberen Fläche des Halbleitersubstrats (10) und dem anderen Ende, und
beim Bonden, nachdem sich die untere Fläche des ersten Bondingabschnitts (22) in einer Richtung zu dem Halbleitersubstrat (10) um das andere Ende dreht, der erste Bondingabschnitt (22) und der zweite Bondingabschnitt (16) einem anodischen Bonden unterzogen werden.

## Revendications

1. Appareil de capteur (100) comprenant : un substrat semi-conducteur (10) ; un substrat en verre (20) ; un capteur de quantité physique (40) ; et une partie de tampon (30) connectée électriquement au capteur de quantité physique (40), dans lequel :
une partie concave (90) du substrat de verre (20) est scellée par collage d'une première partie de collage (22) dans le substrat de verre (20) à une deuxième partie de collage (16) dans le substrat semi-conducteur (10) ;
le capteur de quantité physique (40) et la partie de tampon (30) sont disposés dans un espace scellé (92) scellé par le substrat semi-conducteur (10) et le substrat de verre (20) ;
le substrat de verre (20) présente, dans la première partie de collage (22), une couche d'appauvrissement cationique (26) dont une concentration cationique est inférieure à celle du substrat de verre (20) ;
en vue de dessus, un trou traversant (50) est prévu dans le substrat de verre (20) dans une position superposée à la partie de tampon (30) ;
le substrat de verre (20) comporte un film métallique (52) prévu sur une paroi latérale (28) du trou traversant ;
la partie de tampon (30) est constitué d'un métal, et
le film métallique (52) est en contact avec la partie de tampon (30).

2. Appareil de capteur (100) selon la revendication 1, dans lequel le substrat semi-conducteur (10) comporte, dans la deuxième partie de collage (16), une couche d'oxyde (19) d'oxygène et un semi-conducteur contenu dans le substrat semi-conducteur (10).

3. Appareil de capteur (100) selon la revendication 1, dans lequel
le film métallique (52) comprend une partie d'extension (53) prévue pour s'étendre de la paroi latérale (28) du trou traversant jusqu'à une surface inférieure (27) du substrat en verre (20), qui est une surface inférieure en contact avec l'espace scellé (92), et
la partie d'extension (53) est en contact avec la partie de tampon (30).

4. Appareil de capteur (100) selon la revendication 3, dans lequel la partie de tampon (30) est entourée par le film métallique (52) en vue de dessus.

5. Appareil de capteur (100) selon la revendication 4, dans lequel :
la partie d'extension (53) comprend une partie circonférentielle extérieure en film métallique (54) en contact avec l'espace scellé (92), et
une surface inférieure (55) de la partie circonférentielle extérieure en film métallique (54) est disposée sous une surface supérieure (36) de la partie de tampon (30).

6. Appareil de capteur (100) selon la revendication 3, dans lequel le film métallique (52) est entouré par la partie de tampon (30) en vue de dessus.

7. Appareil de capteur (100) selon la revendication 6, dans lequel :
la partie de tampon (30) comprend une partie circonférentielle extérieure de tampon (37) en contact avec l'espace scellé (92), et
une surface supérieure (36) de la partie circonférentielle extérieure de tampon (37) est disposée au-dessus d'une surface inférieure (55) de la partie d'extension (53).

8. Appareil de capteur (100) selon une quelconque des revendications 3 à 7, dans lequel une somme d'une épaisseur de la partie de tampon (30) et d'une épaisseur de la partie d'extension (53) est supérieure à une hauteur de l'espace scellé (92) dans la position superposée à la partie de tampon (30) en vue de dessus.

9. Appareil de capteur (100) selon la revendication 8, dans lequel une distance entre une surface latérale interne (29) du substrat de verre (20) et la partie de tampon (30), dans le plan du substrat semi-conducteur (10), est supérieure à la hauteur de l'espace scellé (92).

10. Appareil de capteur (100) selon une quelconque des revendications 3 à 9, dans lequel une distance entre une surface latérale interne (29) du substrat de verre (20) et la partie de tampon (30) augmente d'une extrémité supérieure vers une extrémité inférieure de la surface latérale interne du substrat de verre (20), dans le plan du substrat semi-conducteur (10).

11. Appareil de capteur (100) selon une quelconque des revendications 1 à 10, dans lequel
le trou traversant (50) comprend une première section (88) dans laquelle une largeur du trou traversant diminue d'une extrémité supérieure vers une extrémité inférieure et une deuxième section (89) dans laquelle la largeur du trou traversant diminue d'une extrémité inférieure vers une extrémité supérieure,
une largeur de la première section (88) à l'extrémité supérieure du trou traversant est supérieure à une largeur de la deuxième section (89) à l'extrémité inférieure du trou traversant.

12. Procédé de fabrication d'un appareil de capteur (100), le procédé comprenant les étapes suivantes :
le collage d'un substrat semi-conducteur (10) muni d'un capteur de quantité physique (40) et d'une partie de tampon (30) connectée électriquement au capteur de quantité physique (40) à un substrat de verre (20) par collage anodique, dans lequel
le collage consiste à sceller une partie concave (90) du substrat de verre (20) en effectuant une liaison anodique entre une première partie de collage (22) dans le substrat de verre (20) et une deuxième partie de collage (16) dans le substrat semi-conducteur (10) et scelle aussi le capteur de quantité physique (40) et la partie de tampon (30),
un trou traversant (50) est prévu dans le substrat de verre (20) en vue de dessus,
le substrat de verre (20) comporte un film métallique (52) prévu sur une paroi latérale du trou traversant,
la partie de tampon (30) est constituée d'un métal et
le collage entre la première partie de collage (22) et la deuxième partie de collage (16) scelle aussi le trou traversant (50) par la partie de tampon (30).

13. Procédé de fabrication de l'appareil de capteur (100) selon la revendication 12, dans lequel
avant le collage,
une extrémité plus proche du capteur de quantité physique (40) dans une surface inférieure de la première partie de collage (22) et une autre extrémité disposée afin d'être plus éloignée du capteur de quantité physique (40) qu'une extrémité sont disposées afin d'être éloignées d'une surface supérieure du substrat semi-conducteur (10) et
une extrémité et l'autre extrémité sont disposées d'une manière telle qu'une distance entre la surface supérieure du substrat semi-conducteur (10) et une extrémité dans une direction coupant en intersection la surface supérieure du substrat semi-conducteur (10) devienne plus grande qu'une distance entre la surface supérieure du substrat semi-conducteur (10) et l'autre extrémité et
lors du collage, après que la surface inférieure de la première partie de collage (22) a tourné autour de l'autre extrémité dans une direction allant vers le substrat semi-conducteur (10), la première partie de collage (22) et la deuxième partie de collage (16) sont soumises à une liaison anodique.
